Europäisches Patentamt

European Patent Office

Office européen des brevets

(19)

(11) Veröffentlichungsnummer: **0 070 488**
**B1**

(12) **EUROPÄISCHE PATENTSCHRIFT**

(45) Veröffentlichungstag der Patentschrift: 27.05.87

(51) Int. Cl.⁴: **B 23 B 29/034**

(21) Anmeldenummer: **82106210.6**

(22) Anmeldetag: **12.07.82**

(54) Werkzeugkopf.

(30) Priorität: **16.07.81 DE 3128047**

(43) Veröffentlichungstag der Anmeldung:
**26.01.83 Patentblatt 83/04**

(45) Bekanntmachung des Hinweises auf die
Patenterteilung:
**27.05.87 Patentblatt 87/22**

(84) Benannte Vertragsstaaten:
**CH DE GB LI NL SE**

(56) Entgegenhaltungen:
DE-C- 669 105
DE-C- 713 620
US-A-1 547 108
US-A-2 511 884
US-A-2 558 815
US-A-2 821 874
US-A-4 097 179

(73) Patentinhaber: **J. Kühn GmbH & Co.**
**Präzisionswerkzeug KG**
**Köhler Strasse 41**
**D-4270 Dorsten 11 (DE)**

(72) Erfinder: **Johne, Frank, Ing.grad.**
**Hopener Strasse 24**
**D-2842 Lohne (DE)**
Erfinder: **Hartkamp, Hans Georg, Prof. Dipl.-Ing.**
**Nordstrasse 40**
**D-4720 Beckum (DE)**
Erfinder: **Burmester, Hans-Georg**
**Suarezstrasse 8**
**D-1000 Berlin 19 (DE)**

(74) Vertreter: **Koscholke, Gotthold, Dr.-Ing.**
**Rheinallee 147**
**D-4000 Düsseldorf 11 (DE)**

Courier Press, Leamington Spa, England.

EP 0 070 488 B1

## Beschreibung

Die Erfindung bezieht sich auf einen Werkzeugkopf, insbesondere für Dreh- und Ausbohroperationen, mit einem innenseitig eine Lagerfläche aufweisenden Grundkörper, einer darin drehbaren Hülse, die mit einer der Lagerfläche des Grundkörpers angepaßten Gegenfläche sowie mit einer Bohrung versehen ist, einem sich mit einem Halsteil in die Bohrung der Hülse erstreckenden, eine Aufnahme für ein Werkzeug bildenden Werkzeughalter, der relativ zum Grundkörper undrehbar angeordnet ist, wobei die Bohrung der Hülse zur Mittelachse des Grundkörpers exzentrisch ist, derart, daß die radiale Position des Werkzeughalters durch Drehen der Hülse relativ zum Grundkörper veränderbar ist, und mit einer zwischen einem Widerlager des Grundkörpers und dem Werkzeughalter angeordneten, schraubbare Kraftaufbringungsmittel enthaltenden Spanneinrichtung, mittels derer der Werkzeughalter in einer eingestellten Position unter Einschluß eines Randteiles der Hülse mit dem Grundkörper verspannbar ist.

Bei einem bekannten Werkzeug dieser Art (US—A—4 097 179) ist zwischen dem Grundkörper und der Hülse sowie zwischen der Hülse und dem Werkzeughalter jeweils eine zylindrische Zwischenlage aus kompressiblem Kunststoffmaterial vorgesehen. Die Hülse hat am vorderen Ende einen Bund mit einer Kegelfläche und einer Planfläche. Mit diesen Flächen soll sie an entsprechenden Kegel- und Planflächen am vorderen Umfangsteil des Grundkörpers anliegen. Dies stellt eine Überbestimmung dar, die die Gefahr eines undefinierten Verhaltens der Hülse und des sich auf dieser abstützenden Werkzeughalters mit sich bringt. Zugleich lassen die Zwischenlagen zwischen den genannten Teilen unkontrollierte Bewegungen der Hülse und des Werkzeughalters relativ zum Grundkörper zu, was den Forderungen nach hoher Genauigkeit entgegensteht.

Die Spanneinrichtung weist bei dem bekannten Werkzeug eine Anzahl von Schrauben auf, deren Köpfe in Ausnehmungen an der Rückseite des Grundkörpers liegen und sich über kompressible Ringe am Grund der Ausnehmungen als Widerlager abstützen. Mit ihren Enden greifen die Schrauben in Gewindebohrungen ein, die sich in einer an das rückwärtige Ende des Werkzeughalters angeschraubten Platte befinden.

Es ist außerdem bekannt, beim Feinbohren in einer Werkzeugspindel oder einem in eine solche eingesetzten, als Grundkörper anzusehenden Teil eine Exzenterhülse vorzusehen, die über Kegelflächen am Grundkörper anliegt und mit ihm undrehbar verbunden ist (DE—C—669 105 und DE—C—713 620). Der Werkzeughalter läßt sich zur Werkzeugeinstellung in der außermittigen Bohrung der Exzenterhülse drehen und in der jeweiligen Position mittels einer axialen Anzugstange mit Mutter festlegen.

Bei einer solchen Vorrichtung ist die Einstellung des Werkzeuges somit nur durch ein Drehen des Werkzeughalters um seine Längsachse möglich, wobei sich die Winkelposition der Werkzeugschneide mit Bezug auf die Spindel oder den Grundkörper ändert. Dies kann sich sehr nachteilig auswirken. Gerade bei den bei solchen Werkzeugen in Betracht kommenden kleinen Zustellbeträgen können sich bei einer derartigen Winkeländerung die einem Spindelsystem, einem Halter od.dgl. innewohnenden Fehler und Ungenauigkeiten derart mit der Einstelldrehung überlagern, daß die tatsächliche Zustellung der Werkzeugschneide von der gewünschten in völlig unkontrollierbarer Weise abweicht.

Aufgabe ER Erfindung ist es, bestehende Nachteile und Zulänglichkeiten zu überwinden und einen Werkzeugkopf zu schaffen, der ohne Änderung der Winkelbeziehung zwischen einem Werkzeughalter und einem Grundkörper bzw. einer diesen aufnehmenden Spindel eine einfache und genaue Einstellung des Werkzeughalters in der Weise ermöglicht, daß sich bei jeder Einstellung eine definierte Position des vom Werkzeughalter aufgenommenen Werkzeuges ergibt, die auch durch das auf die Einstellung folgende Festspannen des Werkzeughalters nicht nachteilig beeinflußt oder geändert wird. Dabei soll der Werkzeughalter sowohl axial als auch radial so festlegbar sein, daß er kein unkontrollierten Verlagerungen relativ zum Grundkörper mehr erfahren kann. Der Werkzeugkopf soll vielseitig einsetzbar sein und sich sowohl für rotierendes als auch für stehendes Arbeiten ausbilden lassen. Weitere mit alledem in Verbindung stehende Probleme, mit denen sich die Erfindung befaßt, ergeben sich aus der jeweiligen Erläuterung der aufgezeigten Lösung.

Die Erfindung sieht bei einem Werkzeugkopf der eingangs genannten Art vor, daß die Spanneinrichtung einen in einem Hohlraum des Werkzeughalters angeordneten, von dem Widerlager durchsetzten Spannteil mit einer Kegelfläche und einen sich an den Spannteil anschließenden Spannkörper mit konischer Querbohrung, in der ein Kegel als Kraftaufbringungsmittel verschiebbar ist, enthält und daß im Inneren des Halsteiles des Werkzeughalters im Bereich der Kegelfläche des Spannteiles Druckbelastungs-Elemente vorhanden sind, die beim Betätigen der Spanneinrichtung radial nach außen gegen die Innenseite des Halsteiles bewegbar sind.

Ein solcher Werkzeugkopf zeichnet sich durch eine Anzahl wichtiger Vorteile aus. Weil die sozusagen spielfrei zwischen dem Grundkörper und dem Werkzeughalter sitzende Hülse als Einstellorgan das einzige Teil ist, welches eine Drehung um die Längsachse des Werkzeugkopfes erfährt, bleibt die winkelmäßige Zuordnung von Werkzeug halter und Grundkörper oder einer Maschinenspindel ungeachtet der jeweiligen Einstellung von Anfang an unverändert, so daß sonst mögliche Fehlerquellen ausgeschaltet sind. Ein solcher Werkzeukopf läßt eine exakte Feineinstellung zu. Dabei kann eine einfache und gut ablesbare Skalierung vorgesehen werden, wodurch die Gefahr von Einstellfehlern vermieden wird. Von ganz besonderer Bedeutung ist es, daß beim Festspannen des Werkzeughalters in der eingestellten Position keine ungünstigen Kräfte und Momente auftreten, die zu einer unerwünschten Beeinflussung oder Änderung der vorgenommenen Einstellung führen könnten. Die Festspannung des Werkzeughalters erfolgt vielmehr genau in der eingestellten Position. Diese bleibt dann unverändert, weil im festgespannten Zustand keine Möglichkeit zu unkontrollierten Bewegungen besteht. Dank der sich bis zur Außenkontur erstreckenden, bei der Verspannung fest gegeneinander gepreßten Flächen ergibt sich eine starre Einheit des Werkzeughalters mit dem Grundkörper, so daß alle bei einem solchen Werkzeugkopf zu erwartenden Beanspruchungen sicher aufgenommen werden könne. Der Werkzeugkopf läßt sich so ausbilden, daß die wichtigen zur Einstellung und zum Spannen dienenden Teile völlig geschützt liegen und der gesamte Kopf im Betriebszustand dicht ist, so daß bei der Bearbeitung auch keine Schmutzpartikel eindringen können. Außerdem besteht die vorteilhafte Möglichkeit eines inneren Kühlungs- bzw. Schmiersystems.

Bei einer zweckmäßigen Ausführung durchgreift das Widerlager Öffnungen im Halsteil des Werkzeughalters.

Als Widerlager bzw. Widerlager und Querführung für den Werkzeughalter kann insbesondere ein Querstift im Grundkörper vorgesehen sein, wodurch sich eine sehr einfache und trotzdem sichere und genaue Ausbildung ergibt.

Der das Kraftaufbringungsmittel bildende Kegel ist zweckmäßig mit einem in ein Gewinde im Werkzeughalter eingreifenden Schraubenansatz versehen.

Zur radialen Verspannung mit dem Grundkörper dienen die Druckbelastungs-Elemente im Inneren des Werkzeughalter-Halsteiles, wobei der letztere zumindest bereichsweise in radialer Richtung elastisch verformbar bzw. radial aufweitbar ist. Dieser Teil liegt günstig in einem von der Exzenterhülse umgebenen Bereich des Werkzeughalters.

Die elastische Verformbarkeit, die wegen der genau ineinanderpassenden Bereich von Werkzeughalter, Exzenterhülse und Grundkörper ggfs. nur im Bereich von hundertstel Millimetern zu liegen braucht, kann durch geeignete Wahl der Wandstärke erzielt sein. Insbesondere sieht die Erfindung vor, den Halsteil des Werkzeughalters ein- oder mehrfach zu schlitzen, um dadurch eine günstige Verform- bzw. Aufweitbarkeit zu erzielen. Günstig ist eine H-förmige Schlitzanordnung, die aufweitbare Lappen ergibt.

Bei einer einfachen und wirksamen Ausführung sind zur inneren Druckbelastung des zur radialen Verspannung dienenden Teiles auf der Kegelfläche abgestützte Kugeln vorgesehen, deren Halterung mittels des axial bewegbaren Spannkörpers relativ zur Kegelfläche verschiebbar ist. Sehr günstig ist eine Anordnung von drei Kugeln, insbesondere in der Weise, daß zwei der drei Kugeln elastisch aufweitbaren Bereichen des Werkzeughalters zugeordnet sind, während die dritte Kugel diametral gegenüberliegend angeordnet ist. Es ergibt sich dabei im geklemmten Zustand immer ein und dieselbe definierte Lage des Werkzeughalters zum Grundkörper.

Die Exzenterhülse kann in ihrer Wandung mit schlitzartigen Öffnungen versehen sein.

Der Werkzeugkopf läßt sich vorteilhaft mit einem Durchlaßweg für ein Kühl- und/oder Schmiermedium versehen, das zur Auswirkung am Werkzeug kommen oder auch zur Innenkühlung des Kopfes selbst dienen kann.

Weitere Einzelheiten, Merkmale und Vorteile der Erfindung ergeben sich aus der nachstehenden Erläuterung eines Ausführungsbeispieles, aus der zugehörigen Zeichnung und aus den Ansprüchen. Es zeigen:

Fig. 1 einen Werkzeugkopf gemäß der Erfindung, teils in Draufsicht, teils im Längsschnitt,

Fig. 2 eine Ansicht der Exzenterhülse,

Fig. 3 eine Draufsicht zu Fig. 2,

Fig. 4 einen Schnitt nach der Linie IV—IV in Fig. 1,

Fig. 5 eine Ansicht des Halsteiles des Werkzeughalters mit Schlitzanordnung,

Fig. 6 den vorderen Teil eines Werkzeugkopfes einer abgewandelten Ausführung und

Fig. 7 eine Draufsicht zu Fig. 6.

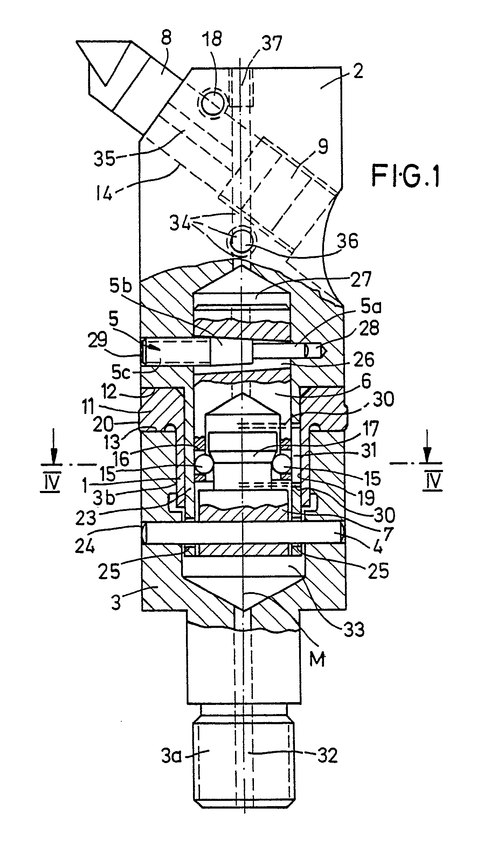

Der in den Fig. 1 bis 5 gezeigte Werkzeugkopf weist einen Grundkörper 3 und einen von diesem getragenen und mit ihm verspannbaren Werkzeughalter 2 auf. Der Grundkörper 3 kann in seiner äußeren Gestalt den jeweiligen Erfordernissen angepaßt sein und z.B. einen Gewindeansatz 3a aufweisen, mit dem er in einer Arbeitsspindel einer Werkzeugmaschine oder einer sonstigen Halterung befestigt werden kann. Der Werkzeugkopf kann sowohl für drehendes als auch für feststehendes Arbeiten verwendbar sein. Der Werkzeughalter 2 weist bei der Ausführung nach Fig. 1 eine schräg gerichtete Aufnahme 14 für ein Werkzeug 8, z.B. einen mit einer Wendeschneidplatte od.dgl. besetzten Drehmeißel, Ausbohrmeißel od.dgl., auf. Mit der Ziffer 9 ist eine Stellschraube für eine Grobeinstellung des Werkzeuges 8 und mit der Ziffer 18 eine Klemmschraube für das Werkzeug bezeichnet.

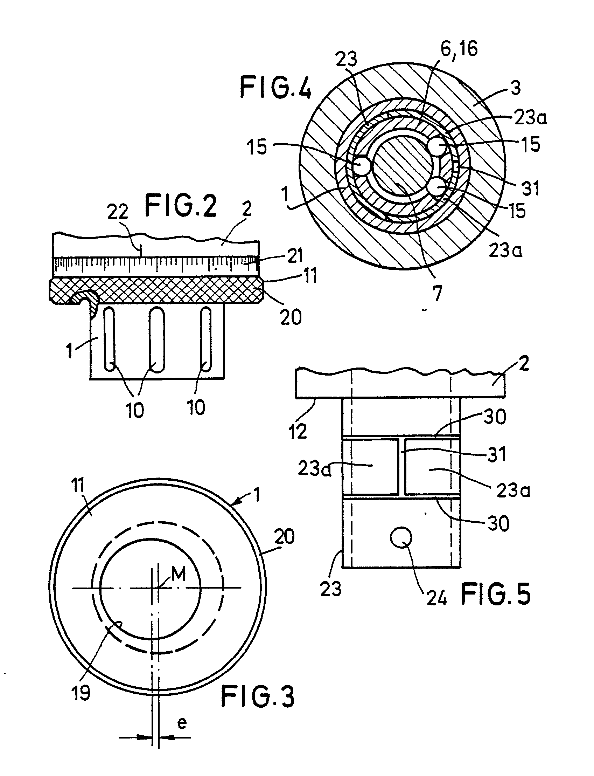

Der Grundkörper 3 nimmt in einer zylindrischen Bohrung 3b den zylindrischen Teil einer Exzenterhülse 1 spielfrei auf, d.h. mit einer genauen Passung, die lediglich im nicht geklemmten Zustand des Kopfes eine Drehung der Exzenterhülse zuläßt. Die letztere weist vorne einen flanschartigen Randteil 11 auf, der zwischen einer vorderen Anlagefläche 13 des Grundkörpers 3 und einer bei dieser Ausführung durch eine schulterartige Absetzung des Werkzeughalters 2 gebildeten Abstützfläche 12 des letzteren liegt. Außenseitig ist der Randteil 11 der Exzenterhülse 1 mit einer einen guten Handangriff zulassenden Rändelung 20 sowie mit einer Skalierung 21 versehen, der eine Marke 22 auf der Außenseite des benachbarten Teiles des Werkzeughalters 2 zugeordnet ist, wie besonders Fig. 2 erkennen läßt.

In ihrem sich in den Grundkörper 3 hinein erstreckenden Teil ist die Exzenterhülse 1 mit mehreren über de Umfang verteilt angeordneten schlitzartigen Öffnungen 10 versehen, deren Zweck weiter unten noch erläutert wird.

Innen weist die Exzenterhülse 1 eine zur Mittelachse M ihrer äußeren Zylinderfläche um den Betrag e versetzte exzentrische Bohrung 19 auf (vgl. Fig. 3), in die ein zylindrischer Halsteil 23 des Werkzeughalters 2 mit genauer Passung, d.h. quasi spielfrei, eingreift. Ein in eine Bohrung 24 des Grundkörpers 3 eingesetzter Querstift 4 durchgreift zwei Bohrungen 25 im Halsteil 23 des Werkzeughalters 2. Dieser Querstift 4 hält den Werkzeughalter 2 undrehbar mit Bezug auf den Grundkörper 3 und bildet zugleich eine Querführung für den Werkzeughalter 2 bei seiner durch Drehen der Exzenterhülse 1 zu bewirkenden Verstellung. In Fig. 1 ist zwischen dem Querstift 4 und den Bohrungen 25 im Halsteil 23 ein der Deutlichkeit halber übertrieben großes Spiel eingezeichnet. Dieses Spiel ist tatsächlich nur so groß, wie es der Verstellbereich für das Werkzeug erfordert, bestimmt durch Größe und Lage der Exzentrizität e der Exzenterhülse 1. Ist z.B. ein maximaler Feineinstellbereich von 0,2 mm vorhanden, wie er bei einem solchen Werkzeugkopf insbesondere in Betracht kommt, so entspricht diese einer Exzentrizität e=±0,1 mm, und das Spiel des Querstiftes 4 in den Bohrungen 25 des Halsteiles 23 quer zur Achse des Querstiftes braucht nur geringfügig größer als 0,1 mm zu sein, wenn in den um 180° versetzten Einstell-Endpunkten die Exzentrizität jeweils in der Achsrichtung des Querstiftes liegt, was in dieser Richtung eben den Verstellweg von 0,2 mm ergibt.

Der Querstift 4 bildet bei der gezeigten Ausführung zugleich ein Widerlager für eine weitgehend in einem Hohlraum 26 des Werkzeughalters 2 untergebrachte Spanneinrichtung, mittels derer der Werkzeughalter 2 nach erfolgter Einstellung relativ zum Grundkörper 3 starr festlegbar ist. Dazu ist auf dem Querstift 4 ein Ankerstück 7 gelagert, das vom Werkzeughalter 2 her auf Zug belastet werden kann, um dadurch die Verspannung herbeizuführen. Dazu bestehen verschiedene Möglichkeiten. Bei der wiedergegebenen vorteilhaften Ausführung ist in dem Hohlraum 27 des Werkzeughalters 2 ein verschiebbarer Spannkörper 6 mit einer konischen Bohrung 26 vorgesehen, in die ein Betätigungsglied 5 eingreift. Diese weist einen vorderen, in einer Bohrung 28 des Werkzeughalters 2 geführten Zapfen 5a, einen konischen Mittelteil 5b sowie einen als Schraube ausgebildeten Endteil 5c auf, der sich in einer Gewindebohrung 29 im Werkzeughalter 2 befindet. Zwischen dem Spannkörper 6 und dem Ankerstück 7 kann eine feste Verbindung bestehen bzw. beide Teile können ein Stück bilden. Bei der wiedergegebenen Ausführung sind jedoch die einander zugewandten Enden des Spannkörpers 6 und des Ankerstückes 7 in besondere Weise ausgebildet, um mit ein und demselben Betätigungsglied 5 sowohl eine axiale Verspannung als auch eine radiale Verspannung des Werkzeughalters 2 mit Bezug auf den Grundkörper zu erreichen.

Der hintere Teil des Spannkörpers 6 ist als Halterung 16 für drei Kugeln 15 ausgebildet, die sich auf einer Kegelfläche 17 am Ankerstück 7 abstützen können und sich nach außen hin an die Innenseite des Halsteiles 23 des Werkzeughalters 2 anlegen können.

Wird die Schraube 5c angezogen, so legt sich der Konus 5b gegen die ihm zugewandte Partie der konischen Bohrung 26 und drückt dadurch den Spannkörper 6 nach vorne, d.h. in Richtung auf das Werkzeug 8 hin. Über die sich dabei fest an die Kegelfläche 17 des Ankerstückes 7 anlegenden Kugeln 15 wird das Ankerstück 7 gegen den das Widerlager bildenden Querstift 4 gedrückt, wodurch die Abstützfläche 12 des Werkzeughalters 2 gegen die vordere Fläche des Randteiles 11 der Exzenterhülse 1 und die Unterseite des Randteiles 11 gegen die Anlagefläche 13 am Grundkörper 3 gepreßt wird, so daß der Werkzeughalter unter Einschluß des Randteiles 11 der Exzenterhülse 1 in axialer Richtung fest mit dem Grundkörper 3 verspannt wird.

Zugleich üben die Kugeln 15 aber auch eine innere Druckbelastung auf den Halsteil 23 aus und pressen diesen gegen den umgebenden Teil der Exzenterhülse 1 und diesen wiederum gegen die Bohrung 3b des Grundkörpers 3, wodurch der Werkzeughalter 2 mit dem Grundkörper 3 auch radial verspannt wird. Dies wird mittels eines einzigen Betätigungsgliedes 5 bewirkt.

Zweckmäßig ist der Halsteil 23 des Werkzeughalters 2 in demjenigen Bereich, in dem die Kugeln 15 angreifen, aufweitbar ausgebildet. Dies kann durch geeignete Wahl der Wandstärke, insbesondere aber durch die Anordnung eines oder mehrerer Schlitze geschehen. Wie die Fig. 1, 4 und 5 erkennen lassen, sind vorteilhaft zwei sich etwa über den halben Umfang des Halsteiles 23 erstreckende Schlitze 30 und ein dazu lotrechter Schlitz 31 vorhanden, so daß der Halsteil 23 an dieser Stelle zwei aufweitbare Lappen 23a bildet. Die eingangs bereits erwähnten Schlitze 10 in der Exzenterhülse 1 dienen dort ebenfalls dazu, eine gewisse Verformung beim Aufbringen der Spannkraft zu erleichtern. Eine solche elastische Verformung kann etwa im Bereich eines oder mehrerer hundertstel Millimeter liegen.

Die Anordnung der Kugeln 15 ist vorteilhaft so, daß zwei Kugeln auf die Lappen 23a wirken, während symmetrisch gegenüberliegend eine einzige Kugel vorhanden ist, die dort die Kraftübertragungsstelle definiert. Es ist dadurch in vorteilhafter Weise die Gewähr gegeben, daß die radiale Verspannung des Werkzeughalters 2 mit dem Grundkörper 3 immer in der gleichen Richtung erfolgt und deshalb immer ein und dieselbe definierte Anlagestelle gegeben ist.

Bei gelöster Verspannung, was durch leichtes Zurückdrehen der Schraube 5c geschieht, kann die gewünschte Feineinstellung des Werkzeuges 8 einfach und schnell durch Drehen des Randteiles 11 der Exzenterhülse 1 erfolgen, wobei die sich zumindest über den halben Umfang erstreckende Skalierung 21 genau ablesbar ist. Nach der Einstellung wird mittels eines einzigen Betätigungsgliedes, nämlich der Schraube 5c, die Fixierung der eingestellten Position mit fester Verspannung der Teile untereinander zu einer starren Einheit erreicht.

Der Werkzeugkopf läßt sich außerdem mit einem insbesondere vom hinteren Ende bis zum Werkzeug führenden Weg für die Hindurchleitung eines flüssigen oder gasförmigen Mediums ausstatten, so daß in vorteilhafter Weise eine Kühlung oder Schmierung des Werkzeuges bzw. der Arbeitsstelle desselben und auch eine Innenkühlung des Kopfes selbst möglich ist. Bei der in Fig. 1 dargestellten Ausführung verläuft ein Kanal 32 durch den rückwärtigen Teil des Grundkörpers 3 bis zu einem inneren Hohlraum 33 desselben, der in den Hohlraum 27 des Werkzeughalters 2 übergeht. Von dort führt ein ggfs. zweifach abgewinkelter Kanal 34 mit einer Fortsetzung 35 bis zur Oberseite des eingespannten Werkzeuges 8. Mit den Ziffern 36 und 37 sind zwei Dichtschrauben für die Enden der Kanalbohrungen bezeichnet.

Weil der Werkzeugkopf infolge der Anlage aller die Außenflächen bildenden Teile 1, 2, 3 völlig dicht ist, können weder Verunreinigungen in sein Inneres eintreten, noch kann ein Kühlmedium od.dgl. an einer unerwünschten Stelle entweichen.

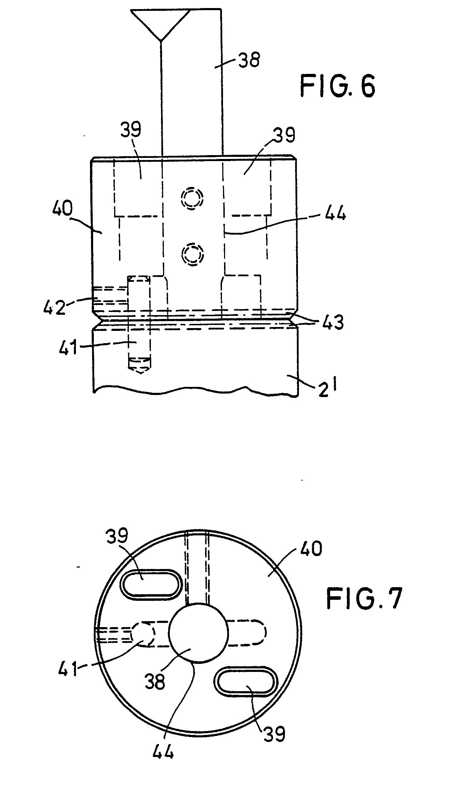

In den Fig. 6 und 7 ist veranschaulicht, daß der Werkzeugkopf auch zum Arbeiten mit einem axial herausragenden, in einer Aufnahme 44 befestigten Werkzeug 38 eingerichtet sein kann. Ein nur mit seinem vorderen Ende wiedergegebener Werkzeughalter 2' weist stirnseitig eine geschliffene Verzahnung 43 auf, die eine Gegenverzahnung an einem Aufsatz 40 hat. Im übrigen ist der Werkzeughalter 2' so ausgebildet, wie es weiter oben für den Werkzeughalter 2 erläutert wurde. Der Aufsatz 40 kann zur Grobeinstellung entlang der Verzahnung 43 verschoben und durch Langlöcher 39 durchgreifende Schrauben in der gewünschten Position mit dem Halter 2' verspannt werden. Mit der Ziffer 41 ist ein Paßstift und mit der Ziffer 42 eine diesem zugeordnete Schraube bezeichnet.

Die Feineinstellung des Werkzeuges 38 geschieht in der in Verbindung mit den Fig. 1 bis 5 erläuterten Weise mit den dort gezeigten Mitteln.

## Patentansprüche

1. Werkzeugkopf, insbesondere für Dreh- und Ausbohroperationen, mit einem innenseitig eine Lagerfläche (3b) aufweisenden Grundkörper (3), einer darin drehbaren Hülse (1), die mit einer der Lagerfläche (3b) des Grundkörpers (3) angepaßten Gegenfläche sowie mit einer Bohrung (19) versehen ist, einem sich mit einem Halsteil (23) in die Bohrung (19) der Hülse (1) erstreckenden, eine Aufnahme für ein Werkzeug (8) bildenden Werkzeughalter (2), der relativ zum Grundkörper (3) undrehbar angeordnet ist, wobei die Bohrung (19) der Hülse (1) zur Mittelachse des Grundkörpers (3) exzentrisch ist, derart, daß die radiale Position des Werkzeughalters (2) durch Drehen der Hülse (1) relativ zum Grundkörper (3) veränderbar ist, und mit einer zwischen einem Widerlager (4) des Grundkörpers (3) und dem Werkzeughalter (2) angeordneten, schraubbare Kraftaufbringungsmittel enthaltenden Spanneinrichtung (5, 6, 7), mittels derer der Werkzeughalter (2) in einer eingestellten Position unter Einschluß eines Randteiles (11) der Hülse (1) mit dem Grundkörper (3) verspannbar ist, dadurch gekennzeichnet, daß die Spanneinrichtung (5, 6, 7) einen in einem Hohlraum (27) des Werkzeughalters (2) angeordneten, von dem Widerlager (4) durchsetzten Spannteil (7) mit einer Kegelfläche (17) und einen sich an den Spannteil (7) anschließenden Spannkörper (6) mit konischer Querbohrung (26), in der ein Kegel (5b) als Kraftaufbringungsmittel verschiebbar ist, enthält und daß im Inneren des Halsteiles (23) des Werkzeughalters (2) im Bereich der Kegelfläche (17) des Spannteiles (7) Druckbelastungs-Elemente (15) vorgesehen sind, die beim Betätigen der Spanneinrichtung (5, 6, 7) radial nach außen gegen die Innenseite des Halsteiles (23) bewegbar sind.

2. Werkzeugkopf nach Anspruch 1, dadurch gekennzeichnet, daß das Widerlager (4) Öffnungen (25) im Halsteil (23) des Werkzeughalters (2) durchgreift.

3. Werkzeugkopf nach einem der Ansprüche 1 und 2, dadurch gekennzeichnet, daß als Widerlager (4) ein Querstift im Grundkörper (3) vorgesehen ist.

4. Werkzeugkopf nach einem der Ansprüche 1 bis 3, dadurch gekennzeichnet, daß der Kegel (5b) mit einem in ein Gewinde (29) im Werkzeughalter (2) eingreifenden Schraubenansatz (5c) versehen ist.

5. Werkzeugkopf nach einem der Ansprüche 1 bis 4, dadurch gekennzeichnet, daß der Halsteil (23) des Werkzeughalters (2) geschlitzt ist.

6. Werkzeugkopf nach Anspruch 5, gekennzeichnet durch eine H-förmige Schlitzanordnung (30, 31).

7. Werkzeugkopf nach einem der Ansprüche 1 bis 6, dadurch gekennzeichnet, daß die Exzenterhülse (1) in ihrer Wandung mit schlitzartigen Öffnungen versehen ist.

8. Werkzeugkopf nach einem der Ansprüche 1 bis 7, dadurch gekennzeichnet, daß als Druckbelastungs-Elemente Kugeln (15) in einer Halterung (16) am Spannkörper (6) vorgesehen sind.

9. Werkzeugkopf nach Anspruch 8, gekennzeichnet durch eine Anordnung von drei Kugeln (15).

10. Werkzeugkopf nach Anspruch 9, dadurch gekennzeichnet, daß zwei der drei Kugeln (15) elastisch aufweitbaren Bereichen (23a) des Werkzeughalters (2) zugeordnet sind, während die dritte Kugel diametral gegenüberliegend angeordnet ist.

## Revendications

1. Tête d'outil, destinée en particulier aux opérations de tournage et d'alésage, présentant un corps de base (3), lequel présente lui-même à l'intérieur une surface d'appui (3b), une douille rotative (1) à l'intérieur, laquelle présente une contre-surface adaptée à la surface d'appui (3b) du corps de base (3) ainsi qu'un alésage (19), un porte-outil (2) servant de logement à un outil (8) et s'étendant par sa partie en forme de col (23) jusque dans l'alésage (19) de la douille (1), ce porte-outil (2) ne peut pas tourner par rapport au corps de base (3), et l'alésage (19) de la douille (1) est excentré par rapport à l'axe médian du corps de base (3), de sorte que la position radiale du port-outil (2) soit modifiable par rotation de la douille (1) par rapport au corps de base (3), et avec un dispositif de serrage (5, 6, 7) contenant des éléments vissables producteurs de la force et placé entre une butée (4) du corps de base (3) et le port-outil (2), à l'aide de ce dispositif de serrage (5, 6, 7), le port-outil (2) est solidarisable avec le corps de base (3) dans une position réglée, cette solidarisation incluant une partie périphérique (11) de la douille (1), caractérisée en ce que le dispositif de serrage (5, 6, 7) contient une pièce de serrage (7) logée dans une cavité (27) du porte-outil (2) et traversée par la butée (4), cette pièce de serrage (7) présente une surface conique (17) et un corps de serrage (6) à alésage conique transversal (26) dans lequel un cône (5b) se déplace et sert à appliquer la force, et caractérisée en ce qu'à l'intérieur de la partie en forme de col (23) du port-outil (2) sont prévus des éléments de compression (15) au niveau de la surface conique (17) de la pièce de serrage (7), éléments qui, lors de l'actionnement du dispositif de serrage (5, 6, 7) se meuvent radialement vers l'extérieur et viennent se plaquer contre la surface intérieure de la partie en forme de col (23).

2. Tête d'outil selon revendication 1, caractérisée en ce que la butée (4) traverse les orifices (25) présents dans la partie en forme de col (23) du porte-outil (2).

3. Tête d'outil selon revendication 1 ou 2, caractérisée en ce qu'une goupille transversale dans le corps de base (3) est prévue pour servir de butée (4).

4. Tête d'outil selon l'une des revendications 1 à 3, caractérisée en ce que le cône (5b) présente une extrémité en forme de vis (5c) prenant dans un taraudage (29) taillé dans le porte-outil (2).

5. Tête d'outil selon l'une des revendications 1 à 4, caractérisée en ce que la partie en forme de col (23) du porte-outil (2) présente des fentes.

6. Tête d'outil selon la revendication 5, caractérisée en ce que les fentes sont disposées en "H" (30, 31).

7. Tête d'outil selon l'une des revendications 1 à 6, caractérisée en ce que les parois de la douille excentrée (1) présentent des lumières en forme de fentes (10).

8. Tête d'outil selon l'une des revendications 1 à 7, caractérisée en ce que les éléments prévus pour produire la compression sont des billes (15) placées dans un logement (16) du corps de serrage (6).

9. Tête d'outil selon la revendication 8, caractérisée en ce qu'y sont disposées trois billes (15).

10. Tête d'outil selon la revendication 9, caractérisée en ce que deux des trois billes (15) sont affectées à des zones élastiquement agran- dissables (23a) du porte-outil (2), tandis que la troisième bille leur est diamétralement opposée.

**Claims**

1. A tool head, in particular for turning and drilling operations, with a basic body (3) showing a bearing surface (3b) on the inside, a sleeve (1) rotatable inside same which is provided with counter-surface matching the bearing surface (3b) of the basic body (3) as well as with a bore (19), a toolholder (2) forming a mounting for a tool (8) extending into the bore (19) with a neck piece (23), said tool holder being appointed relative to the basic body (3) non-rotating, the bore (19) of the sleeve (1) being eccentric to the central axis of the basic body (3) in such a manner that the radial position of the toolholder (2) is changeable relatively to the basic body (2) by turning the sleeve (1), and a clamping device (5, 6, 7) containing a screw force applicator appointed between an abutment (4) of the basic body (3) and the toolholder (2), by means of said clamping device the toolholder (2) can be clamped with the basic body (3) in a set position enclosing an edge piece (11) of the sleeve (1), being characterized by the clamping device (5, 6, 7) containing a clamping part (7) with a conical surface (17) appointed in a hollow (27) of the toolholder (2), penetrated by the abutment (4) and a clamping body (6) with conical cross bore (26) connecting to the clamping part (7), in said conical cross bore a cone (5b) is movable as force applicator, and by pressure-applying elements (15) being provided inside the neck piece (23) of the toolholder (2) in the area of the conical surface (17), said pressure-applying elements being movable radially outwards against the inside of the neck part (23) when the clamping device (5, 6, 7) is actuated.

2. A tool head according to Claim 1, characterized in that the abutment (4) engages openings (25) in the neck piece (23) of the toolholder (2).

3. A tool head according to Claims 1 and 2, characterized in that a cross pin is provided in the basic body as an abutment (4).

4. A tool head according to Claims 1 to 3, characterized in that the cone (5b) is provided with a screw shoulder (5c) engaging in a thread (29) in the toolholder (2).

5. A tool head according to Claims 1 to 4, characterized in that the neck part (23) of the toolholder (2) is slotted.

6. A tool head according to Claim 5, characterized by an H-shaped slotted arrangement (30, 31).

7. A tool head according to Claims 1 to 6, characterized in that the eccentric sleeve (1) is provided with slot-type openings (10) in its walling.

8. A tool head according to Claims 1 to 7, characterized in that balls (15) are provided in a mounting (16) on the clamping body (6) as pressure-applying elements.

9. A tool head according to Claim 8, characterized by an appointment of three balls (15).

10. A tool head according to Claim 9, characterized in that two of the three balls (15) are allocated to elastically extensible areas (23a) of the toolholder (2), while the third ball is appointed diametrically opposite.

FIG.1

FIG.4

FIG.2

FIG.5

FIG.3

0 070 488

FIG. 6

FIG. 7

3